# EUROPEAN PATENT SPECIFICATION

(11) **EP 2 350 760 B1**
(45) Date of publication and mention of the grant of the patent: **04.01.2017**
(21) Application number: 08872938.9
(22) Date of filing: 14.11.2008
(51) Int. Cl.: B62D 1/28, B60W 30/095, B60W 30/16, G05D 1/02, G08G 1/00

(54) **METHOD FOR AUTOMATIC GUIDANCE OF THE MOTOR VEHICLES ON ROADS AND AUTOMATIC TRANSPORT SYSTEM**
VERFAHREN ZUR AUTOMATISCHEN FÜHRUNG VON KRAFTFAHRZEUGEN AUF STRASSEN UND AUTOMATISCHES TRANSPORTSYSTEM
PROCÉDÉ DE GUIDAGE AUTOMATIQUE DES VÉHICULES MOTORISÉS PRÉSENTS SUR LES ROUTES ET SYSTÈME DE TRANSPORT AUTOMATIQUE

(43) Date of publication of application: 03.08.2011
(73) Proprietor: Sitar, Branislav, 84103 Bratislava (SK)
(72) Inventor: Sitar, Branislav, 84103 Bratislava (SK)
(74) Representative: Danek, Vilém
(86) International application number: PCT/IB2008/003136
(87) International publication number: WO 2009/106920

(56) References cited:
- EP-A- 0 135 740
- WO-A-95/21405
- US-A- 4 932 617
- US-A- 5 111 401
- US-A- 5 148 898
- US-A- 5 289 778
- US-A- 5 318 143
- US-A- 5 708 427
- US-B1- 6 249 724

## Description

### Field of the invention

The invention concerns driverless motor vehicles, which are steered by a computer using an autopilot method along a predetermined pathway. The invention is earmarked for the automotive industry and transportation.

### Description of the prior art

Permanent increase of the number of motor vehicles is steering the mankind towards an ecological catastrophe due to the CO₂ emissions released into the atmosphere. There are attempts to reverse this unfavorable development. Hydrogen motors have been already developed, but the automotive industry did not take up on their production due to operational costs several times higher in comparison to classical fossil fuel engines. The problem with hydrogen filling stations also remains an issue.

Electric motors for cars have also been developed; however, their use is minimal today due to the electric battery weight and a relatively short range under 200 km. The hybrid engines only provide a partial solution of the emission problem as they use fossil fuels too.

With the rise of road traffic, mortality and injuries in road accidents as a consequence of driver's failure increase proportionally.

There have been permanent attempts to create automatic traffic systems with driverless computer steered vehicles. Particularly, the systems using vehicles with electric motors only. It will have considerable impact on the environment, climatic changes, traffic safety and other aspects of the transport system. A lot of driverless cars and car steering systems have been invented. Known are for example vehicle steering systems with permanent tracks, with built-in electric guiding wire, light reflection, radio guidance system, guidance by fluorescent material on the pathway or GPS satellite controlled navigation, etc. Such systems are described as prior art in the patent US 3935922. These driverless steering systems are usable only for special applications and are not appropriate for regular city transport.

The document US 5318143 (Parker, Roan) teaches a lane sensing system (20) which comprises a processor (22) operable to drive an infrared optical transmitter (24). Light is reflected by a center stripe (18) placed in the center of a highway lane. Reflected light is received in right and left receivers (26) and (28). The processor (22) uses the information to control a power steering control system (30) and a speed control system (32). Information may be encrypted into the center stripe (18) and used by processor (22) to control the speed of the vehicle (10) or to display information to an operator of the vehicle (10) through a display system (34). However, such method is based on light reflections registered by two infrared receivers. In the case of US 5318143 method the precision of guidance (evaluated by the inventor to several cm) depends on the quality of reflection, which depends on the amount of dirt on the road. Secondly, the earlier method does not contain radiofrequency scanning nor does it contain certain type of info-line, but simple guideline painted on the road surface. Since the US 5318143 does not suppose fully automatic drive, the driver may damage the guideline when he deviates from correct direction and crosses the guideline during braking. Moreover, the optical imaging device used in US 5318143 does not allow obtaining a clear image of the splitting guidelines on the intersection.

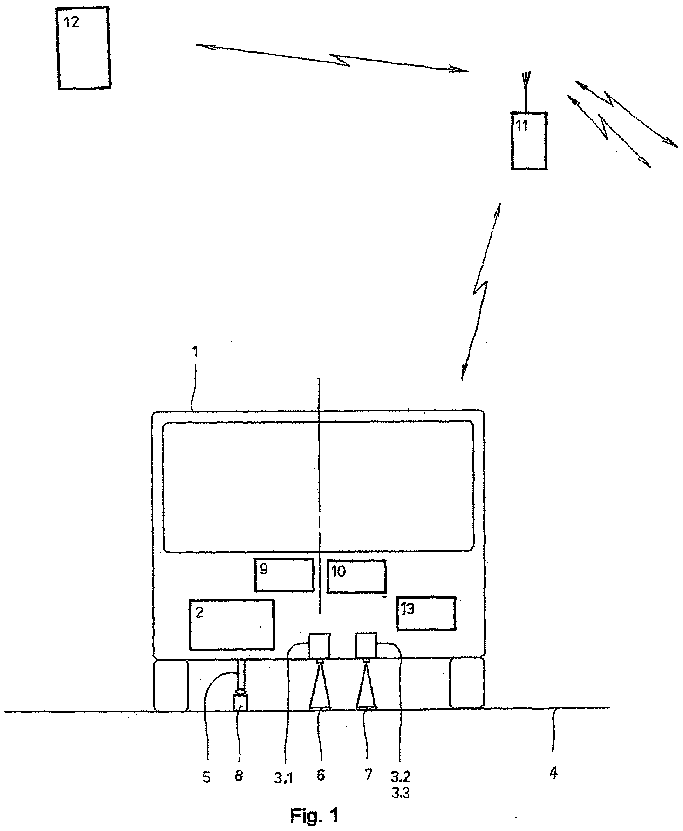

The document US 5148898 (Musachio) describes a transportation system (10) including electric vehicles (12) which comprises a roadway (14) having a load bearing surface, an electric power rail (16) extending longitudinally along the roadway (14) and having a power bus and a default electrical potential level, the rail (16) being divided into individually energizable, longitudinally aligned segments (20), and control circuits (38) associated with each energizable segment (20) for connecting each segment (20) of the power rail (16) either to the power bus or the default electrical potential level upon actuation. From Fig. 1, 2 and 3 and from the description it can be concluded that the electric power system proposed in Us 5148898 is so complicated and expensive, that it is not known on usage of this proposal for 18 years. There are many commercially available electric traction systems used in trams, trolleybuses etc. Other than electrical traction systems are not convenient for the automatic driverless cars.

The document US 5111401 (Everett et al) describes a navigational control system that directs an autonomous vehicle to travel along a floor from a first location to a destination within an environment, and includes a propulsion module having a processor that receives navigation control signals for directing the motion of the module and provides position signals. At least one reflective, encoded stripe is applied to the floor of the environment. If stripe detecting device, mounted to the module, detects the stripe, recognition signals are provided. Ranging means mounted to the module measures the range between the vehicle and any object within a predetermined distance of the vehicle. A host computer determine an initial path for the vehicle to follow in order to reach the destination; provides the navigation control signals to the processor; receives data from the processor for determining an estimated dead-reckoning position of the vehicle; and receives the recognition signals for directing the vehicle to follow the stripe if any of the coordinates of the stripe are coincident with the coordinates of the initial path. The position estimation of the vehicle is updated by the host computer as the vehicles travels along the initial path. The updated position is functionally related to the coordinates of the detected region of the stripe and to the estimated dead-reckoning position. If the ranging means measures an obstruction blocking the initial path, the module is directed to avoid the obstruction. From Fig. 8 and from the description can be concluded that the US 5111401 solution describes an autonomous vehicle for industrial area, which is a completely different vehicle, than the driverless car. The speed of vehicles described in US 5111401 is usually 10-20 km/h. Transport systems similar to that described in US 5111401 are commercially available, but they are not suitable for automatic transport system for passengers. The purpose of scanner used in US 5111401 is different to the one used in present invention too.

The document WO9521405 (Davis, Zelinkovsky) describes a transport system which includes a communications network and one or more vehicles each having an on-board control and data exchange unit, wherein the communications network includes a transport control unit; and a plurality of road units (10) arranged in series along a vehicle travel route, each road unit being adapted for communication with the transport control unit so as to exchange data therewith, and being further adapted for direct communication with at least two road units positioned adjacent thereto, wherein the on-board control and data exchange unit includes transceiver apparatus for communicating with each of the plurality of road units in series while travelling therepast, data processing apparatus connected to the transceiver apparatus, and control apparatus, connected to the data processing apparatus for selectably controlling and sensing any of a predetermined plurality of vehicle operating functions in response to signals received by the transceiver apparatus from the road units. However, from statements found on pages 17 and 22: "selectable manual control, in predetermined situations is retained.", it can be concluded that system proposed in WO9521405 is merely semiautomatic. Moreover, the WO9521405 contains following statements: "The road units are arranged in series along a multi-channel communication cable". "Communication is carried out between road units, vehicles and transport control unit". Thus, the method proposed by WO9521405 is very expensive and complicated. Expensive multi-channel communication cables and active road units have to be built into the road. The communication between road units, vehicles and transport control unit is producing a lot of data, for which transport control units at various hierarchical levels has to be used (see Figs. 1 and 2 in WO9521405). Disadvantages of such complex hierarchical level control system are obvious: a) high price, b) slow decision process because of large data flow form which appears a slow reaction of the vehicles in unexpected situations, which can be dangerous for passengers, c) increased probability of malfunction because of complexity of the system. As from statement in WO9521405 on page 22: "the longitudinal reception range (typically 1.2 meters) of the two centering antennae 44 overlaps the beginning of the longitudinal reception range of a main communication antenna 56" and form Figs. 4a and 4b in WO9521405, it is possible to estimate transversal precision of the vehicle guidance to at least 10 cm. In WO9521405 on page 38 is stated: "...the distance 2.5 meters) between road units", which is a longitudinal precision of the WO9521405 transport system. A shorter distance between road units in WO9521405 system is very probably not possible because of interference effects between them, which can spoil the reliability of information. Unacceptable large transversal and longitudinal precisions of WO9521405 system can cause serious problems for vehicles passing intersections and in the case of emergency breaking of vehicles. Very good transversal and longitudinal precisions are necessary conditions for using electric traction to bring the electric power to the vehicle during the vehicle motion.

The status of art also recognizes driverless car systems for regular roads using navigation by optical cameras and sensors over-viewing traffic situation and passing on information to the board computer steering the motor vehicle. Vehicles of this type are expensive and today used only as experimental models. The most famous car of this type is "Boss" by General Motors, using a combination of radar, optical sensor LIDAR and GPS visualization systems. During the 2007 tests within the city limits it reached an average speed of 15 km/h. It is obvious that this type of car is still slow and it does not reduce the number of road accidents and production of greenhouse gases.

Patent US 200800047778 contains a navigation and steering system based on GPS navigation. The communication between the vehicle and GPS satellites is performed on long distances, which leads to slow vehicle reaction times. Due to this problem this type of navigation system is recommended only for agricultural machinery.

There are also cars using electromagnetic guidance systems described in patents US 4006790, US 4855656, US 4344498, US 5175480, enabling to guide a driverless car along electric cables built into the road. This method however does not cover all aspects of routine automatic transport system such as: maintenance of a safety distance between cars, correct turning at intersections, automatic parking, electric energy supply during long distance travels, etc.

From the prior art, we know electrically powered vehicles, where electric current to the motor is supplied from batteries. A disadvantage of the electro-mobiles is their short range, not exceeding 200 km despite using a large amount of batteries, which in addition have a considerable weight. The real need of electro-mobiles is underlined by the "Better Place" project in which the Israeli government approved a change of transport system in the whole country to electro-mobiles. The project implementation is slated for 2011, when the first electro-mobiles by Renault and Nissan should be delivered to the market. Electro-mobiles should have a very economical consumption of only a 1.6 liters of petrol equivalent per 100 km. The disadvantage of the "Better Place" system is a need to stop at the exchange stations, where discharged batteries have to be exchanged for new. Within the project, 500,000 exchange stations should be built in Israel, which is capital intensive.

Known are also hybrid engines for motor vehicles, but they solve the emission problem only partially as they still use fossil fuels for longer distances.

Vehicle actuation also uses hydrogen fuel cells. Operation of such vehicles is still expensive and problematic, because a network of hydrogen fuel stations is non-existent so far.

The existing problems involving mainly slow reaction times of driverless car steering, which is attributable to either a huge amount of information coming from the optical systems, radars and sensors in the vehicles of "Boss" type, or by enormous distances between vehicle and satellites in the GPS navigation triggered a need to create a system, which would allow using the driverless cars in a computer controlled transport system on the proposed type of roads. This will establish a computer controlled order in the road traffic without emissions and traffic accidents.

The result of this effort is the method for automatic guidance of the motor vehicles on the roads and automatic transport system described below.

### Merit of the invention

The above described defects are in principle eliminated by the invented method for automatic guidance of the motor vehicles on roads, which operates on the assumption that only driverless cars steered by a board computer will be present on road. Considered are electro-mobiles with electric motors. In this invention, the term vehicle refers to a passenger car of the automatic taxi type of different sizes, buses of different sizes, lorries, motor vehicles of different types and sizes and special motor vehicles. The board computer controls vehicle guidance, movement parameters and vehicle actuator in interaction with the telecommunication data exchange either with the central computer and/or with the other locally present board computers of surrounding vehicles. The vehicle guidance is based on an optical imaging of the guideline present on or in the surface of the road by the optical guideline imaging device fixed on the vehicle. Optical imaging device with a CCD camera is fixed under the floor in the front part of the vehicle exactly on the longitudinal vehicle axis. The board computer steers the wheels according to the guideline image so that the vehicle follows the guideline placed on the road. The board computer evaluates all deviations between the guideline image and the vehicle axis and transfers a command to the steering device to turn wheels accordingly so that the vehicle axis and its movement direction are positioned exactly over the guideline. For safety reasons, the car is equipped by a backup optical imaging device with a CCD camera placed behind the first optical guideline imaging device. In case of any malfunction of the first optical imaging device of the guideline, the vehicle will be steered by the backup optical imaging device of the guideline.

The board computer controls vehicle movement parameters by optical scanning of the info-line present on or in the surface of the road by the info-line optical imaging device fixed on the vehicle. In this case, the info-line comprises a one dimensional bar code. The bar code on any particular part of the road comprises coded information about preset vehicle speed and/or its actual position and/or radius of the road curvature and/or guideline splitting on the intersection and/or stopping point at an intersection or a parking place and other necessary information. This coded information is scanned by the first info-line optical imaging device. The second info-line optical imaging device comprising two CCD cameras transfers information to the board computer steering the vehicle where for any reason the guideline is not scanned or the information on the guideline position is missing in the board computer or where the bar code was incorrectly read by the first optical imaging device. In an alternative version, the info-line can also be in the form of a 2D (two dimensional) code comprising more information.

The board computer controls the vehicle movement parameters, which are usually derived from optical scanning of the info-line present on or in the surface part of the road by at least one radiofrequency sensing device fixed on the vehicle. In this case, the info-line represents a radiofrequency code contained in the radiofrequency chip. The radiofrequency code on any particular part of the road comprises coded information on the preset vehicle speed and/or its actual position and/or radius of the road curvature and/or guideline splitting on the intersection and/or stopping point on an intersection or a parking place and other necessary information.

According to the information from the bar code, the board computer software modifies vehicle speed, by the steering device turns the wheels so that the vehicle follows the guideline, traces the car movement on the map, ensures proper vehicle turning to the desired direction at intersections and stops the vehicle at intersections or at an intended parking place. The bar code length along the info-line depends on the preset vehicle speed in the specific road section. Parts of the info-line which share the same line code are called info-line sectors. In road sections where vehicles accelerate or decelerate, the length of the bar code sectors will adequately increase or decrease respectively.

An important feature of the automatic driverless car system is the communication of the vehicle board computer via telecommunication system e.g. GSM with other locally present board computers of the surrounding vehicles to solve immediate traffic issues. Each board computer knows its instant location (address) on the road map. It continually transmits the information on its instant location (address) to the vehicles driving in front, behind or in the neighbouring lane. All vehicles travel in the given lane at the same - preset speed. Each board computer maintains a safety distance from other vehicles for cases of acceleration, deceleration or even hard braking in dangerous situations. The vehicle brakes in interaction with the surrounding vehicles to maintain a safe distance between them. The board computer calculates adequate speed and time for a vehicle change lanes to be safe and prevent collisions with other vehicles. The same algorithm will be used at an intersection, where information from the info-line will be used to follow the selected guideline.

Due to safety reasons vehicles are equipped with a front scanner and side scanners to prevent collisions should an unexpected obstacle emerge in the traffic lane such as a human or animal. In such situation, the vehicle stops immediately. The reaction time of the board computer is considerably shorter than the human reaction times. The vehicle brakes in interaction with the surrounding vehicles to maintain a safety distance between them. In the traffic system with computer controlled vehicles measures will be taken to avoid presence of humans or animals on the road. The board computer is also equipped with a self-diagnostics system to identify malfunctions on a vehicle. In the case of a serious malfunction, the driverless vehicle will carry passengers to the nearest parking place and ask them to get off the car and then it will move to the nearest service point.

In the transport system contained herein involving motor vehicles steered by the board computers, the essential component is a stationary central computer, which is receiving information on instant position (address) of each vehicle on the transport system map. The central computer gives commands to all vehicles in the system, maintains traffic flow and solves emergency situations. The central computer commands are obligatory for each board computer of any vehicle in the system.

One of the features of the invented automatic transport system is that the board computer controls parameters of at least one electric actuator and/or electric battery in the vehicle. In the road sectors not allowing installation of electric traction by which the electric actuator could be powered, the board computer powers the electric actuator from batteries. This solution will be used mainly in urban areas. To the contrary, on roads with long sections free of intersections typical for highways, or roads connecting villages and the like, the board computer controls the electric power flow through at least one electric power bus fixed on the vehicle from at least one section of the electric traction located on an elevated part of the road or placed on the road barrier.

The first basic feature of the invented automatic transport system is a vehicle adapted for the movement on a modified road. The second basic feature is the modification of the road for the movement of driverless vehicles.

The vehicle comprises at least one electric actuator and at least one optical and/or radiofrequency info-line imaging device. Each is oriented either optically and/or by way of radiofrequency towards the road. At least one power bus is oriented towards the road and/or the road barrier. Further, it comprises a board computer connected to at least one optical guideline imaging device and at least one optical and/or radiofrequency info-line imaging device, and on the output, it is connected to the active parts of the power bus, steering device and the electric actuator. The board computer is further connected via a mobile telecommunication facility to the stationary central computer and/or other locally present board computers of the surrounding vehicles.

The optical guideline imaging device and at least one optical and/or radiofrequency info-line imaging device in the vehicle contain a CCD camera. To the contrary, the radiofrequency info-line imaging device comprises a radio receiver with an antenna. Because the guideline and the info-line scanning has to be functional and reliable also at night, a lamp is installed in front of the optical guideline imaging device and/or the optical info-line imaging device. Also, a cleaning apparatus comprising a mechanical remover and/or vacuum cleaner and/or ventilator could be installed in front of the optical guideline imaging device and/or the optical info-line imaging device.

The road is on or inside its surface equipped by at least one guideline and at least one info-line and at least one partial and/or full electric traction installed on the elevated part of the road or on the road barrier.

The guideline consists of a track with a longitudinal contrast line in the middle.

The info-line consist of sectors of a bar or 2 D code comprising traffic parameters: the preset vehicle speed and/or its actual position and/or radius of the road curvature and/or guideline splitting at an intersection and/or stopping point at an intersection or a parking place and another necessary information.

The info-line consist of a radiofrequency chip containing a radiofrequency code comprising traffic parameters: the preset vehicle speed and/or its actual position and/or radius of the road curvature and/or guideline splitting at an intersection and/or stopping point at an intersection or a parking place and another necessary information.

The advantages of the method for automatic guidance of motor vehicles on roads and the automatic transport system are obvious from the visible consequences. It can solve the pressing issue of atmosphere pollution by emissions from motor cars, which thereafter cause a greenhouse effect and trigger serious climatic changes on Earth. The invented transport system allows using electrically powered vehicles whereby emissions from cars are reduced to the zero. The invented transport system will help to solve many problems such as climatic changes, shrinking oil resources and rising petrol prices; it will solve traffic issues such as traffic jams in cities or on highways, parking issues, etc. The problem of toady's electro cars is their short range. The invented transport system solves this problem by introducing electric traction installed on the elevated part of the road and/or the road barrier. By doing this, we achieve unlimited vehicle range within the transport system. At the same time, it is necessary that the vehicles within the system with electric traction be controlled by computers, which are driving more precisely and without the faults often committed by drivers.

Further, a very important asset of the invented transport system will be a considerable decrease of road accidents, which are usually caused by faults and improper driving of drivers. The social and economic effect of the decrease of mortality and other road accidents will be vast and unambiguously positive.

The invented transport system can replace all present all kinds of terrestrial transport. For example, railway transport will become non effective and comfortless. The passenger will not need to travel to the railway station, wait for the train to transport him to the railway station in another town, form which he has to travel to the chosen address by another type of transport. The intercity taxi described herein will arrive in any moment in front of his house. It will transport him fast and comfortably to the chosen destination in another town. The existing railway corridors could be rebuilt to serve as fast arteries of the invented transport system. Construction and maintenance of the roads within the invented transport system will be much cheaper than the construction and maintenance of the railway tracks. The invented system can also effectively and profitably utilize existing metro lines or tramway corridors in the cities.

### Brief description of the drawings

The method for automatic guidance of motor vehicles on roads and automatic transport system will be illustrated in detail within the particular implementations shown on the drawings.
Fig. 1 shows the block scheme of the vehicle and the whole system.
Fig. 2 shows a scheme of the road with a guideline and an info-line for one traffic lane in one direction.
Fig. 3 shows a scheme of the road with a guideline and the info-line, which is completed by an electric traction installed on elevated part of the road and/or on the road barrier for one traffic lane in one direction.

### Description of the examples

It is understood that particular applications of the invention are presented for illustration and not for limitation of the technical solutions. The specialists, familiar with the prior art will find, or will be able to find within routine experiments many equivalents to the particular solutions of this invention. Also, such equivalents will fall under the claims presented in the invention. For the experts familiar with the prior art, it will not be difficult to identify proper dimensions, choice of materials and construction designs for the application of the invention, therefore such details were not disclosed.

### Example 1

In this example of particular application of the invention, the method is described for automatic guidance of the motor vehicles 1 on the roads 4 in the case of supplying power from the battery 13 which is shown in Fig.1. Only driverless vehicles 1 are considered moving on the roads 4 and controlled by the board computer 9. Considered are vehicles 1 equipped with electric actuators 2. The board computer 9 controls the steering of the vehicle 1 movement and traction parameters in collaboration with the mobile data exchange both with the stationary central computer 12 and also with the other locally present board computers 9 of the surrounding vehicles 1. The steering of the vehicle 1 is derived from the optical scanning of the guideline 6 situated on the surface of the road 4 by the optical guideline 6 imaging device 3.1 fixed on the vehicle 1. The optical imaging device 3.1 with a CCD camera is fixed under the floor in the front part of the vehicle 1 exactly on the longitudinal vehicle 1 axis. The board computer 9 steers the wheels according to the guideline 6 image by means of a steering device 10 so that the vehicle 1 follows the guideline 6 placed on the road 4. All deviations between the guideline 6 image and the vehicle 1 axis are evaluated by the board computer 9 and a command is transferred to the steering device 10 to turn wheels accordingly so that the vehicle 1 axis and its movement direction get exactly over the guideline 6. For safety reasons, the car 1 is equipped by a backup optical guideline 6 imaging device 3.1 with a CCD camera placed behind the first optical guideline imaging device 3.1. In case of any malfunction of the first optical imaging device 3.1 of the guideline 6, the vehicle 1 will be steered by the backup optical imaging device 3.1 of the guideline 6.

The board computer 9 controls vehicle 1 movement parameters by optical scanning 3.2 of the info-line 7 present on or in the surface of the road 4 by the info-line optical imaging device 3.2 fixed on the vehicle 1. The Info-line 7 comprises a bar code. The bar code on any particular part of the road comprises coded information on the preset vehicle 1 speed, its actual position, radius of the road curvature, guideline 6 splitting at intersections, stopping point at an intersection or a parking place and other necessary information. This coded information is scanned by the first info-line optical imaging device 3.2. The second info-line optical imaging device 3.2 comprising two CCD cameras transfers information to the board computer 9 steering the vehicle 1 in this case, when due to any reason the guideline 6 is not scanned or the information on the guideline 6 position in the board computer 9 is missing, or where the bar code was incorrectly read by the first optical imaging device 3.1.

According to the information from the bar code, the board computer 9 software modifies the vehicle 1 speed, by way of the steering device 10 turning the wheels so that the vehicle 1 follows the guideline 6, traces the vehicle 1 movement on the road map, ensures proper vehicle 1 turning to desired direction at an intersection and stops the vehicles 1 at an intersection or the intended parking place. The bar code length along the info-line 7 depends on the preset vehicle 1 speed in the particular road section. Parts of the info-line 7 sharing the same bar code are called info-line 7 sectors. In the road sections where vehicles accelerate, or decelerate, the length of the line code sectors will adequately increase or decrease respectively.

An important feature of the automatic driverless car system is the communication of the vehicle 1 board computer 9 via the telecommunication system 11 e.g. GSM with the other locally present board computers 9 of the surrounding vehicles 1 to solve actual traffic situations. Each board computer 9 knows its instant location (address) on the road map. It continually transmits the information on its instant location (address) to the vehicles 1 driving in front, behind or in neighbouring driving lane. Based on the information on the movement of the surrounding vehicles 1, the board computer 9 maintains a safety distance from the vehicle 1 driving in front of it. All vehicles 1 travel in the given lane at the same - preset speed prescribed by the info-line 7. Each board computer 9 maintains a safety distance from other vehicles 1 also in the case of acceleration, deceleration, or even hard breaking in dangerous situations. The vehicle 1 brakes in collaboration with the surrounding vehicles 1, to keep a safe distance between them. The board computer 9 also calculates adequate speed and time for a vehicle 1 to change lanes so that it is safe and collisions with other vehicles 1 are prevented. The same algorithm will be used at intersections where the information from the info-line 7 will be used to follow a selected guideline 6.

Due to safety reasons, the vehicle 1 is equipped by a front scanner and side scanners to prevent collisions in case unexpected obstacles such as humans or animals are on the road. In such situations, the vehicle 1 stops immediately. The reaction times of the board computer 9 are considerably shorter than the human reaction times. The vehicle 1 brakes in interaction with the surrounding vehicles 1 to keep a safe distance between them.

The board computer 9 is equipped also with a self-diagnostics system monitoring defects on the vehicle 1. In the case of serious defect, the driverless vehicle 1 will carry passengers to the nearest parking place, ask them to get off the car, and then it will move to the nearest service point.

The invented automatic transport system operates on motor vehicles 1 steered by the board computers 9 with the essential component being a stationary central computer 12, which is getting information on instant position (address) of each vehicle 1 on the transport system map. The central computer 12 gives commands to all vehicles 1 in the system, maintains traffic flow and solves emergency situations. The central computer 12 commands are obligatory for each board computer 9 of any vehicle 1 in the system.

Road 4 sections not allowing installation of electric traction 8 to power_the electric actuator 2, the board computer 9 could power the electric actuator 2 from batteries 13. This kind of operation will be used mainly in urban areas.

### Example 2

This example of particular application of the invention describes the second method for automatic guidance of the motor vehicles 1 on the roads 4 in the case of supplying power from electric traction 8. The characteristics from Example 1 are identical, but they are enhanced by new ones. On roads 4 with long sections without intersections, or exits typical for highways, or roads 4 connecting villages and the like, the board computer 9 controls electric power flow through at least one power bus 5 fixed on the vehicle 1 from at least one section of the electric traction 8 located on elevated part of the road 4.

Alternatively, in this method for automatic guidance of the motor vehicles 1 on the roads 4, the board computer 9 controls electric power flow through at least one power bus 5 fixed on the vehicle 1 from at least one section of the electric traction 8 located on or in the road barrier 14.

Within practical operation of driverless vehicles 1 controlled by a board computer 9, it is possible in accordance to the situation to combine supply of power from batteries 13 with taking power from the electric traction 8.

### Example 3

This example of particular application of the invention describes the motor vehicle 1 as one part of the automatic transport system, which is modified for the movement on the road 4 as it is shown in Fig. 1., the motor vehicle 1 comprises one electric actuator 2, two optical guideline imaging devices 3.1 and two optical imaging devices 3.2 for the info-line 7 scanning. Each of them is oriented towards the road 4. The vehicle 1 comprises an electric power bus 5 oriented towards the road 4. Further, it comprises a board computer 9 connected to an optical guideline imaging device 3.1, info-line optical imaging device 3.2 and connected to the action units of the power bus 5 steering device 10 and electric actuator 2. The board computer 9 is by mobile telecommunication system 11 connected with a stationary central computer 12 and with the other locally present board computers 9 of the surrounding vehicles 1. The optical guideline imaging device 3.1 and the optical info-line imaging device 3.2 of the motor vehicle 1 comprise CCD cameras. A lamp is placed in front of the optical guideline imaging device 3.1 and the optical info-line imaging device 3.2 of the motor vehicle 1. A cleaning apparatus comprising a mechanical remover and a ventilator is installed in front of the optical guideline imaging device 3.1 and the optical info-line imaging device 3.2 of the motor vehicle 1.

In the case the electric actuator 2 in the vehicle 1 is using other voltage as the voltage in the electric traction 8, the vehicle 1 would comprise a voltage converter.

### Example 4

This example of particular application of the invention describes the motor vehicle 1 as one part of the automatic transport system modified for the movement on the road 4, expanding the application under Example 3. The motor vehicle 1 can also comprise an auto-diagnostic device, which is not obligatory. In another alternative, a cleaning apparatus comprising a mechanical remover and a ventilator is installed in front of the optical guideline imaging device 3.1 and the optical info-line imaging device 3.2 of the motor vehicle 1. In another alternative, the vehicle 1 is equipped with four electric actuators, one on each wheel. In another version, the info-line imaging device 3.2 could be replaced by a radiofrequency info-line imaging device 3.3 with a radio receiver with antenna.

Alternatively, the vehicle 1 can comprise two power buses 5 oriented towards the electric traction 8 located on the elevated part of the road 4, provided the conditions on the road allow such arrangement.

### Example 5

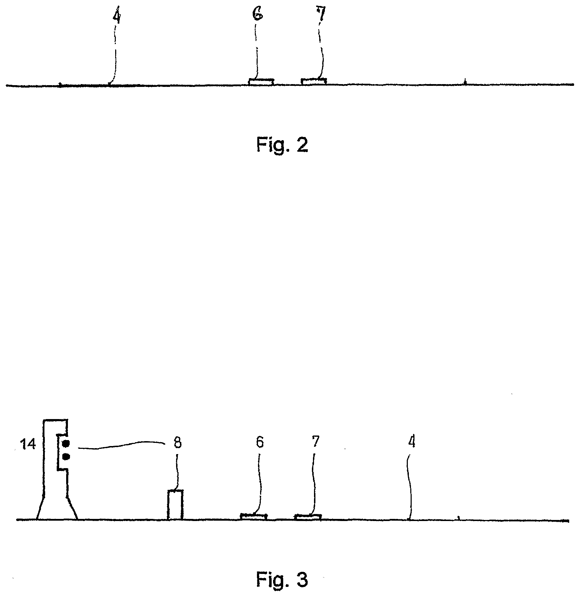

This example of particular application of the invention describes one implementation of the road 4 as a second part of the automatic transport system, applicable in the urban area, which is modified for the vehicle 1 movement as shown in Fig. 2. The road surface 4 is equipped by one guideline 6 and one info-line 7. The guideline 6 consists of a track with a longitudinal contrast line in the middle. The info-line 7 consists of the sectors of a bar code comprising movement parameters: the preset vehicle 1 speed, its actual position, radius of the road curvature, guideline 6 splitting at an intersection, a stopping point at an intersection or a parking place and the other necessary information. The guideline 6 and/or one info-line 7 could be made in the form of a paint coat or a stencil by means of pattern. They could be manufactured also as plastic or metallic lines glued onto the road 4 or by the other suitable method of attachment such as anchoring units. The line surface could be dressed by transparent hard varnish.

### Example 6

This example of particular application of the invention describes one implementation of the road 4 as a second part of the automatic transport system, applicable in the urban area, which is modified for the vehicle 1 movement, extending the implementation from Example 5. The road 4 is in or on its surface equipped by the info-line 7, which consists of the sectors of a line code comprising movement parameters described above. As another alternative, the road surface 4 is equipped by the info-line 7, which consists of radiofrequency chips containing a radiofrequency code comprising traffic parameters described above. In another alternative, the road surface 4 is equipped by several guidelines 6 and several info-lines 7.

It should be clarified that in scope of the invented integrated automatic city transport system all kind of vehicles 1 as passenger cars of the automatic Taxi type of different sizes, buses of different sizes, lorries, special motor vehicles are steered by board computers 9 and actuated by electric actuators. Motor vehicles 1 travel down the guideline 6 by the same - preset speed prescribed by the info-line 7. Passenger vehicles 1 are of the Taxi type for two, four or more passengers. The vehicles 1 will be parked in parking stands where they will recharge their batteries 13 from the electric power point built-in the parking stand from electric traction 8 located under the vehicle 1. Batteries 13 allow the vehicle to drive a distance inside the city of maximum 20 - 50 km. When a passenger comes to the vehicle 1, the door opens. Passengers get on and on the board computer 9 control console inputs the desired destination. After inserting a credit card, the board computer calculates the traffic fee. The door closes and with the road free, the Taxi moves from the parking stand to the acceleration lane or directly to the driving lane where it will travel at a preset speed, maintaining communication with the surrounding vehicles 1 and maintaining a safety distance between them. This way passengers are carried via an optimal route according to the city electronic map to the desired destinations. After passengers get off, the vehicle 1 is ready to transport other passengers. This solves parking problems. The traffic in the town is smooth and fast due to the control and regulation by a stationary central computer 12. The speed in the town is matched to the character of the roads, in particular sections it can reach up to 100 km/h. If there is no vehicle 1 in a parking place, the passenger could call it by a mobile telephone. No driving licence is necessary for passengers.

Cargo vehicles 1, buses and special vehicles operate on a similar principle. A cargo vehicle 1 of the corresponding size will come upon a phone request to a loading place. After loading, the customer will provide the board computer 9 with the address to which the goods should be transported to. He will insert the credit card to which the transport fee will be debited. The vehicle 1 will transport the goods to the required destination, where the recipient will unload it. The vehicle 1 is ready for further transport. The stationary central computer 12 will dispatch it to the required location.

Special vehicles, such as ambulances, police cars, fire brigade cars, service and other vehicles will have the option of manual steering to be able to exit the computer controlled transport system. Also other cargo or passenger vehicles, which need to drive outside the invented transport system e.g. to building sites, etc. will be equipped with manual steering. When a vehicle equipped with the manual steering will arrive to the invented automatic transport system, its steering will be taken over by the board computer 9.

### Example 7

This example of particular application of the invention describes the second implementation of the road 4 as a second part of the automatic transport system, applicable in the intercity area, modified for the vehicle 1 movement as shown in Fig. 3. The essential part of the road 4 is described in Example 5 and alternatively also in Example 6. A distinctive feature is that it comprises at least one partial or full electric traction 8 located on elevated parts of the road 4 and/or in the road barrier 14.

It should be clarified that the invented integrated intercity transport system is a proper solution for inter city transport. The guidelines 6 and info-lines 7 are painted onto the highways driven by passengers or cargo vehicles 1. Passenger transport is covered by Intercity Taxi adapted for high speed driving.

Passengers get on and put in the desired destination into the board computer 9 control console. Passengers in the city will order an Intercity Taxi to their individual addresses. After boarding, passengers will input the address in the target city and pay by a credit card. The intercity Taxi will carry passengers to their required addresses via optimal routes. On roads 4 with long sections without intersections, the electric traction 8 is located on the road barrier 14, which feeds the vehicle 1 power through the electric power bus 5 in form of a trolley located on the side of the vehicle 1 for its movement and also for battery 13 recharge.

The right lane of a four-lane highway is earmarked for heavy motor vehicles 1 such as lorries or buses driving at lower speed. The left lane will be reserved for passenger and lighter cargo vehicles 1 travelling at high speed. All vehicles 1 will travel in the given lane at same - preset speed and maintain safety distances between them. In the middle of the highway there will be the usual median separating barrier 14. For safety reasons, traffic lanes are separated by lower barriers 14, which will keep the vehicle 1 within the lane in emergency cases until halt. The transition lanes from slower to faster lane are located after each intersection. An acceleration lane, in which the vehicle 1 increases its velocity to the fast lane is located between slow and fast lane. At the end, the accelerating lane it will change to the high speed lane. Similar process will occur before an intersection at which the vehicle 1 will turn. First, it will switch to the deceleration lane and then it will travel in the slow lane and turn at the intersection. At the intersection and in the switching points there is no electric traction 8 and the electric vehicle 1 is powered by batteries 13.

### Industrial usability

The invented method for automatic guidance of the motor vehicles on the roads and the automatic transport system will most probably find its use in large areas and international transport systems and also in local industrial systems.

## Claims

1. A method for automatic guidance of a motor vehicle (1) with an electric actuator (2) on a road (4), comprising optical and/or radiofrequency scanning of a guideline (6) consisting of a track with a longitudinal contrast line and/or radiofrequency line situated on or in the surface of the road (4), a board computer (9) and a optical and/or radiofrequency guideline imaging device (3.1) located on the vehicle (1) and a steering of the vehicle is derived from the optical and/or radiofrequency scanning of the guideline, so the board computer (9) knows its instant location on a road map, **characterised in that** the guidance is executed only by the board computer (9) which coordinates direction guidance, driving parameters and the vehicle (1) actuator (2) in interaction with a mobile data transfer by means of a mobile telecommunication network (11) both from a stationary central computer (12) and from other locally present board computers (9) of surrounding motor vehicles (1), while driving parameters of the vehicle (1) are derived from the optical and/or radiofrequency scanning of an info-line (7) situated on or in the surface of the road (4) by optical and/or radiofrequency info-line imaging devices (3.2, 3.3) located on the vehicle (1).

2. The method of claim 1 **wherein** driving power for at least one electric actuator (2) and/or battery (13) of the vehicle (1) is derived from electric energy take-off by at least one electric power bus (5) fixed on the vehicle (1) and having at least on one section oriented towards the road (4) and/or towards the road barrier (14) from an electric traction (8) located on or in the surface of the road (4) and/or in the road barrier (14).

3. An automatic transport system comprising a motor vehicle (1) with an electric power drive adapted for driving on a road (4), further comprising at least one electric actuator (2), an optical and/or radiofrequency guideline imaging device (3.1) and a guideline (6) consisting of a track with a longitudinal contrast line and/or radiofrequency line located on or in the surface of the road, a board computer (9) connected via input data with at least the optical and/or radiofrequency guideline imaging device (3.1), at least one partial and/or full electric traction (8) located on the surface of the road (4) and/or in the road barrier (14), and in terms of output data the board computer is connected with active elements of an electric power bus (5), an steering device (10) and the electric actuator (2), the board computer (9) is further interconnected by means of a mobile telecommunication network (11) with both an stationary central computer (12) and also with other locally present board computers (9) of surrounding vehicles (1), **characterised in that** the system further comprises at least one optical and/or radiofrequency info-line imaging device (3.2., 3.3) oriented towards the road (4), which is on or in its surface furnished by at least the guideline (6) and at least one info-line (7) and at least the electric power bus (5) oriented towards the road (4) and/or to the road barrier (14), and at least the optical info-line imaging device (3.2, 3.3) comprising a high precision CCD camera and/or radiofrequency info-line scanning device (3.2) and the vehicle (1) comprises a radio receiver with an antenna so the board computer (9) knows its instant location on the road map, and the info-line (7) consists of the sectors of a bar or 2D codes and/or radiofrequency chips containing radiofrequency codes comprising driving parameters: the preset vehicle (1) speed and/or its actual position and/or radius of the road curvature and/or guideline (6) splitting at an intersection and/or a stopping point position at an intersection or a parking place.

## Patentansprüche

1. Methode für automatisches Führen eines Kraftfahrzeuges (1) mit elektrischem Antrieb (2) auf der Fahrbahn (4), einschließlich optisches und/oder Radiofrequenz-Ablesen der Führungslinie (6), bestehend aus einer Bahn mit längslaufender Kontrastlinie und/oder Radiofrequenzlinie, die auf oder innerhalb der Oberfläche der Fahrbahn (4)platziert, eines Bordcomputers (9) und eines optischen und/oder Radiofrequenz-Darstellungsgeräts (3.1) der Führungslinie das am Fahrzeug (1)angebracht ist, und wo die Fahrzeugsteuerung von der optischen und/oder Radiofrequenz-Aufnahme der Führungslinie abgeleitet ist, also kennt der Bordcomputer (9) seine momentane Lage auf der Straßenkarte, **die dadurch gekennzeichnet ist, dass** die Führung nur durch den Bordcomputer (9) durchgeführt wird, der die Führungsrichtung, die Steuerungsparameter sowie den Antrieb (2) des Fahrzeugs (1) koordiniert, und das in Interaktion mit der mobilen Datenübertragung durch mobile Telekommunikationsnetze (11), und zwar sowie aus einem stationären Zentralcomputer (12), als auch aus anderen örtlich anwesenden Bordcomputern (9) umliegender Kraftfahrzeuge (1), während die Steuerungsparameter des Fahrzeugs (1) aus dem optischen und/oder Radiofrequenz-Ablesen der Infoline (7)abgeleitet sind, die auf oder innerhalb der Oberfläche der Fahrbahn (4) platziert ist, mithilfe eines am Fahrzeug (1) angebrachten optischen und/oder Radiofrequenz-Darstellungsgeräts (3.2, 3.3) der Infoline.

2. Methode laut Anspruch 1, in der die Steuerungskraft für mindestens einen elektrischen Antrieb (2) und/oder eine Batterie (13) des Fahrzeugs (1) von der Abnahme elektrischer Energie über mindestens eine elektrische Speisungs-Hauptleitung (5) abgeleitet ist, die am Fahrzeug (1) befestigt ist und dabei mindestens ein ihr Teil in Richtung Fahrbahn (4) und/oder in Richtung Leitplanke (14) orientiert ist von der innerhalb oder auf der Oberfläche der Fahrbahn (4) und/oder in der Leitplanke (14)platzierten elektrischen Traktion (8.)

3. Das automatische Beförderungssystem besteht aus einem Kraftfahrzeug (1) mit elektrischem Antrieb der angepasst ist zum Steuern auf der Fahrbahn (4), desweiteren besteht es aus mindestens einem elektrischen Antrieb (2), einem optischen und/oder Radiofrequenz-Darstellungsgerät (3.1) der Führungslinie und einer Führungslinie (6), bestehend aus einer Bahn mit längslaufender Kontrastlinie und /oder einer auf oder innerhalb der Oberfläche der Fahrbahn (4) platzierten Radiofrequenz-Linie, einem Bordcomputer (9), der mithilfe von Eingangsdaten mindestens mit einem optischen und/oder einem Radiofrequenz-Darstellungsgerät (3.1) der Führungslinie verbunden ist, sowie mindestens mit einer teilweisen und/oder vollständigen elektrischen Traktion (8), die auf oder innerhalb der Oberfläche der Fahrbahn (4)und/oder in der Leitplanke (14) angebracht ist, im Bereich der Ausgangsdaten des Bordcomputers ist dieser mit aktiven Partikeln der elektrischen Speisungs-Hauptleitung (5), der Steuerungsanlage (10) und des elektrischen Antriebs (2) verbunden, der Bordcomputer (9) ist desweiteren gegenseitig durch mobilen Telekommunikationsnetz (11) sowohl mit stationärem Zentralcomputer (12) als auch mit anderen, sich in der Nähe befindenden, Bordcomputern (9) umliegender Fahrzeuge (1)verbunden, **die dadurch gekennzeichnet sind, dass** das System desweiteren mindestens ein optisches und/oder Radiofrequenz-Darstellungsgerät (3.2, 3.3) der zur Fahrbahn (4) orientierten Infoline einschließt, dabei ist diese Infoline auf oder innerhalb ihrer Oberfläche mit mindestens einer Führungslinie (6) ausgestattet, sowie mit mindestens einer Infoline (7) und mindestens einer elektrischen Speisungs-Hauptleitung (5) die in Richtung Fahrbahn (4) und/oder Richtung Leitplanke (14) orientiert ist, und mit mindestens einem optischen Darstellungsgerät (3.2, 3.3) der Infoline, das CCD Kameras mit hoher Genauigkeit und/oder ein Radiofrequenz-Ablesegerät (3.2) der Infoline enthält, und ein Fahrzeug (1) das einen Radioempfänger mit Antenne hat, also kennt der Bordcomputer (9) seine momentane Lage auf der Straßenkarte, wo sich die Infoline (7) aus Sektoren eines EAN- oder eines Flächencodes und/oder aus Radiosequenz-Chips, die Radiosequenz-Codes enthalten, zusammensetzt, die die folgenden Steuerungsparameter enthalten: Vorwahl der Geschwindigkeit des Fahrzeuges (1) und/oder seine aktuelle Lage und/oder den Radius der Fahrbahnkrümmung und/oder die Trennung seiner Führungslinie (6) an einer Kreuzung und/oder seine Anhaltestelle an der Kreuzung oder die Stelle seines Einparkens.

## Revendications

1. Procédé de guidage automatique d'un véhicule à moteur (1) avec un entraînement électrique (2) sur la route (4), comprenant la détection optique et/ou par radiofréquence de la ligne de guidage (6), consistant en une piste avec la ligne contrastante longitudinale et/ou la ligne de radiofréquence située sur ou dans la surface de la route (4), un ordinateur de bord (9) et un dispositif d'affichage optique et/ou par radiofréquence (3.1) de la ligne de guidage située sur le véhicule (1) et où la conduite du véhicule est dérivée de la détection optique et/ou par radiofréquence de la ligne de guidage, l'ordinateur de bord (9) connaît donc sa position actuelle sur la carte routière, **caractérisé en ce que** le guidage n'est réalisé que par l'ordinateur de bord (9) qui coordonne la direction du guidage, les paramètres de commande et l'entraînement (2) du véhicule (1) en interaction avec la transmission mobile de données par l'intermédiaire du réseau de télécommunication mobile (11) à partir de l'ordinateur central fixe (12) et d'autres ordinateurs de bord locaux (9) des véhicules à moteur environnants (1), tandis que les paramètres de commande du véhicule (1) sont dérivés de la détection optique et/ou par radiofréquence de la ligne d'information (7) située sur ou dans la surface de la route (4) à l'aide du dispositif d'affichage optique et/ou par radiofréquence (3.2, 3.3) de la ligne d'information située sur le véhicule (1).

2. Procédé selon la revendication 1 où la force d'entraînement est dérivée pour au moins un entraînement électrique (2) et/ou la batterie (13) du véhicule (1) de la consommation de l'énergie électrique par l'intermédiaire d'au moins un bus d'alimentation électrique (5) monté sur le véhicule (1) et ayant au moins une partie orientée vers la route (4) et/ou vers la glissière de sécurité (14) à partir de la traction électrique (8) située sur ou dans la surface de la route (4) et/ou dans la glissière électrique (14).

3. Le système de transport automatique est constitué d'un véhicule à moteur (1) avec un entraînement électrique conçu pour la conduite sur la route (4), il comprend ensuite au moins un entraînement électrique (2), le dispositif d'affichage optique et/ou par radiofréquence (3.1) de la ligne de guidage et la ligne de guidage (6) comprenant la ligne contrastante longitudinale et/ou la ligne de radiofréquence située sur ou dans la surface de la route, l'ordinateur de bord (9) connecté par l'intermédiaire des données d'entrée au moins avec un dispositif d'affichage optique et/ou par radiofréquence (3.1) de la ligne de guidage, au moins une traction électrique partielle et/ou complète (8) située sur ou dans la surface de la route (4) et/ou dans la glissière électrique (14), dans la zone des données de sortie de l'ordinateur de bord, il est relié aux particules actives du bus d'alimentation électrique (5), du dispositif de commande (10) et de l'entraînement électrique (2), l'ordinateur de bord (9) est ensuite relié par l'intermédiaire du réseau de télécommunication mobile (11) avec l'ordinateur central fixe (12) et avec les autres ordinateurs de bord locaux (9) des véhicules à moteur environnants (1) **caractérisés en ce que** le système comprend en outre au moins un dispositif d'affichage optique et/ou par radiofréquence (3.2, 3.3) de la ligne d'information orientée vers la route (4) qui est équipée sur ou dans sa surface d'au moins une ligne de guidage (6) et une ligne d'information (7) et d'au moins un bus d'alimentation électrique (5) orienté vers la route (4) et/ou vers la glissière de sécurité (14), et d'au moins un dispositif d'affichage optique (3.2, 3.3) de la ligne d'information comprenant une caméra CCD haute précision et/ou un dispositif de détection par radiofréquence (3.2) de la ligne d'information et un véhicule (1) comprenant un récepteur radio avec antenne, l'ordinateur de bord (9) connaît donc sa position actuelle sur la carte routière où la ligne d'information (77) est constituée des secteurs du code à barres ou du code 2D et/ou des puces radiofréquence contenant les codes radiofréquence comprenant les paramètres de contrôle : la présélection de la vitesse du véhicule (1) et/ou sa position actuelle et/ou le rayon de courbure de la route et/ou la division de la ligne de guidage (6) au carrefour et/ou la position d'arrêt au carrefour ou l'espace de stationnement.
